# EUROPEAN PATENT SPECIFICATION

(11) **EP 2 147 783 B1**
(45) Date of publication and mention of the grant of the patent: **09.05.2018**
(21) Application number: 09166096.9
(22) Date of filing: 22.07.2009
(51) Int. Cl.: B32B 7/12, B32B 27/08, B32B 27/16, B32B 27/28, B32B 27/30, B32B 27/36, B32B 27/20, B32B 1/08

(54) **STACK SEALABLE HEAT SHRINKABLE FILM**
BLOCKVERSIEGELBARE, WÄRMESCHRUMPFENDE FOLIE
FILM THERMORÉTRÉCISSABLE SCELLABLE EN SUPERPOSITION

(30) Priority: 23.07.2008 EP 08160939
(43) Date of publication of application: 27.01.2010
(73) Proprietor: Flexopack S.A., 194 00 Koropi (GR)
(72) Inventor: Gkinosatis, Dimitris, 19400, Koropi Attica (GR)
(74) Representative: Isarpatent

(56) References cited:
- EP-A- 0 149 321
- EP-A- 1 842 664
- EP-A2- 0 810 087
- EP-A2- 1 985 443
- US-A- 5 079 051
- US-A- 5 089 308
- US-A- 5 182 307
- US-A1- 2004 065 052

## Description

The present invention refers to a multilayer heat shrinkable film characterized by a combination of desirable properties, such as high shrinkage, good optical properties, excellent sealability and stack sealability. The invention further is directed to a method of producing said film. The invention is further directed to the use of said film or bags and pouches made therefrom for packaging goods as for example food products. The invention also refers to tubes made with the film.

Generally, the packaging of food items by means of a heat shrinkable bag comprises the following steps
1. Putting the food item inside the bag and removing the air (vacuumising) with the help of a vacuum device.
2. Sealing of the open end of the bag.
3. Placing the vacuum pack in a heat shrinking media such as hot water under a temperature that ensures the shrink of the pack (eg 90°C).
4. The pack is ready and is characterized by appealing appearance and long shelf life because of the absence of oxygen.

These films need high shrink properties and good optics to ensure an excellent appearance and excellent sealability so that there is no entrance of oxygen to the pack as this would be detrimental for the shelf life of the food.

In some cases, where the food is stored in frozen conditions for example, there is the possibility to use a non gas barrier film. The other characteristics remain the same.

Packaging films with the above properties are well known in the art.

A problem that is often found in the art is that during the packaging process the operators must put the food in the bags with extra care, as they must avoid the overlapping of the bags. When overlapped or semi overlapped packs are vacuumized and sealed, the outer surfaces of the two (or more) bags seal the one to the other under the temperature and pressure conditions used to guarantee the sealability of the inner surfaces. This may lead to high rejects and loss of productivity. This situation in particular occurs in stack sealing procedures, i.e. in a situation, wherein two or more products are situated one upon the other and then are sealed.

If the operator tries to modify the temperature, seal time, pressure conditions there is a high possibility that the inner surfaces do not seal sufficiently.

Using bags that can be heat sealed when overlapping occurs, without problems of insufficient seal strength and sealing of the outer surfaces could lead to higher productivity, smaller cycle of each packed product and less attention required by the operator.

The problem to be solved has been addressed in the past:
EP 1131205 refers to the use of a high melting point polyamide in the outer layer of a multilayer film. The use of this material has the disadvantage that it reduces the shrinkage of the final film because of the high vicat of this resin. Therefore, this approach is not suitable for heat-shrinkable films and products made thereof.
EP 1060077 refers to the use of a polyester material in the outside layer of the multilayer film. This material also has a high vicat and reduces the shrinkage of the multilayer product. Further, the material uses EVOH as a high barrier resin, which has unacceptable performance in a lot of packaging applications where high humidity conditions occur.
EP 1415930 A1 refers to the use of peelable combinations comprising polybutylene in the outer layer of a multilayer film. The problem in this case is that there is a high risk of deteriorating the optical properties as the outer layer (which contributes a lot to the optical properties of the combination) consists of the blend of two incompatible polymers able to make a cohesive peel. The outer layer should comprise an easily peelable combination so that stack sealability is easily achieved. The peelable composition is applied by "extrusion, co-extrusion or coating of a substrate". EP0810087A2 discloses a seven layered heat shrinkable structure for making bags and pouches comprising from the innermost to the outermost layer (layer in contact with the atmosphere) the following sequence: (1) resin material / (2) adh / (3) PVDC/ (4) adh/ (5) PA/ (6) adh/ (7) co-PET, whereby the thermoplastic polyester is co-PET, It may be irradiated and is used for meat packaging.

Conflicting document EP1985443A2 discloses a heat shrinkable film having a shrinkage of at least 10% measured according to ASTM 2732 in water at 90°C in at least one of MD, TD directions, where the film comprises an outer layer comprising polyester elastomer and a core layer comprising EVOH and/or PVDC . The resin for the outer layer is a polyester elastomer, preferably a polyester ether elastomer, wherein the melting point of the resin preferably is 190 to 220°C, whereby a blend of the elastomer with a non elastomeric copolyester, preferably polybutylene terephthalate is used.

### SUMMARY OF THE INVENTION

Therefore, the problem underlying the invention is to provide a heat sealable film, which can be advantageously be used in stack sealing applications. It is a further problem of the invention to avoid that the outer surfaces of the two (or more) bags in stack sealing applications seal the one to the other under the temperature and pressure conditions used to guarantee the sealability of the inner surfaces. It is a still further problem to provide bags that can be heat sealed when overlapping occurs, without problems of insufficient seal strength and sealing of the outer surfaces. It is an additional problem to provide a film for stack sealing applications which has excellent optical properties.

These problems are overcome by the subject-matter of the independent claims. Preferred embodiments are set forth in the dependent claims.

The inventors have managed to overcome all of these problems by discovering a film combining
1. Excellent overlapping sealability
2. Excellent sealing properties over a big range of machine conditions.
3. Excellent optical properties
4. Manufacturing in a stable and controlled way.

This is achieved by a heat shrinkable multilayer film where the outer (outside) layer comprises a polyester material with a melting point more than 220 °C and a core layer comprises a copolymer of PVDC, whereby the polyester used in the outer layer is PBT, and wherein the outer layer does not comprise a blend of PBT with a polyester elastomer.

### Definitions:

In this application the following definitions are used:
The term "film" refers to a flat or tubular flexible structure of thermoplastic material.

The term "heat shrinkable" refers to a film that shrinks at least 10% in at least one of the longitudinal and transverse directions when heated at 90°C for 4 seconds. The shrinkability is measured according to ASTM 2732.

The phrase "longitudinal direction" or "machine direction" herein abbreviated " MD" refers to a direction along the length of the film.

The phrase "outer layer" refers to the film layer which comes in immediate contact with the outside environment (atmosphere).

The phrase "inner layer" refers to the film layer that comes in direct contact with the product packed. This is also called "sealing layer" as this layer must be hermetically sealed in order to protect the product from ingress of air.

The phrase "core layer" refers to any layer of the film between the outer and the inner layer. For example in a layer configuration like A/B/C/D/E, the B,C,D are core layers.

As used herein, the term "homopolymer" refers to a polymer resulting from polymerization of a single monomer.

As used herein, the term "copolymer" refers to a polymer resulting from polymerization of at least two different polymers.

As used herein, the term "polymer" includes both above types.

As used herein the term "polyethylene" identifies polymers consisting essentially of the ethylene repeating unit. The ones that have a density more than 0.940 are called high density polyethylene (HDPE), the ones that are have less than 0.940 are low density polyethylene (LDPE).

As used herein the phrase "ethylene alpha olefin copolymer" refers to polymers like linear low density polyethylene (LLDPE), medium density polyethylene (MDPE), very low density polyethylene (VLDPE), ultra low density polyethylene (ULDPE), metallocene catalysed polymers and polyethylene plastomers and elastomers.

As used herein the phrase "styrene polymers" refers to styrene homopolymer such as polystyrene and to styrene copolymers such as styrene-butadiene copolymers, styrene-butadiene-styrene copolymers, styrene-isoprene-styrene copolymers, styrene-ethylene-butadiene-styrene copolymers, ethylene-styrene copolymers and the like.

As used herein the phrase "ethylene methacrylate copolymers" refers to copolymers of ethylene and methacrylate monomer. The monomer content is less than 40%.

As used herein the phrase "ethylene vinyl acetate copolymer" refer to copolymers of ethylene and vinyl acetate.

As used herein, the term EVOH refers to saponified products of ethylene vinyl ester copolymers. The ethylene content is typically in the range of 25 to 50%.

As used herein the term PVDC refers to a vinylidene chloride copolymer wherein a major amount of the copolymer comprises vinylidene chloride and a minor amount of the copolymer comprises one or more monomers such as vinyl chloride and/or alkyl acrylates and methacrylates.

As used herein the term polyamide refers to homopolymers and copolymers.

As used herein the term "polyester" includes polymer materials like polyethylene terephthalate(PET), polybutylene terephthalate(PBT), polytrimethylene terephthalate(PTT), polyethylene naphthalate and others.

As used herein the term "ionomer" refers to ethylene-acid copolymers which have been neutralized by metals such as sodium, zinc, lithium or others. The acid used is usually methacrylic or acrylic acid.

As used herein the term "polybutylene" refers to butene-1 homopolymers and copolymers. Useful copolymers comprise ethylene mer units. Ethylene content should be generally less than 50%.

All measurement methods mentioned herein are readily available for the skilled person. For example, they can be obtained from the American National Standards Institute at: www.webstore.ansi.org

All percentages used are per weight unless stated otherwise.

### DETAILED DESCRIPTION OF THE INVENTION

According to a first aspect the present invention is directed to a heat shrinkable multilayer film having a shrinkage of at least 10% measured according to ASTM 2732 in water at 90°C in at least one of MD, TD directions, where the outer layer of the film comprises a polyester material with a melting point of more than 220°C and a core layer comprises PVDC. The polyester used is polybutylene terephthalate (PBT).

According to preferred version, the PVDC polymer is a copolymer comprising vinyl chloride or methyl acrylate mers.

In one preferred version, the multilayer film is irradiated. The irradiation may be a beam, gamma radiation, UV radiation or other.

In the film according to the present invention, the heat sealing layer may comprise a single polyolefin or a blend of different polyolefins. In a preferred version of the structure, the sealing layer comprises at least one homogeneous polyolefin.

In a further preferred version the sealing layer comprises a homogeneous polyolefin produced with non metallocene catalysts. Preferably propylene ethylene copolymers produced with post metallocene catalysts.

Between the inner sealing layer and the PVDC barrier layer, a tie layer could be used. Preferred materials for this tie layer may be ethylene ester copolymers, such as ethylene vinyl acetate copolymers, ethylene methyl acrylate copolymers and other materials well known in the art. A preferred version might include maleic anhydrite modified ethylene ester copolymers or maleic anhydrite modified LLDPE. Commercial trademarks are for example BYNEL® from Dupont and ADMER® from Mitsui.

Between the outer and the barrier layer there may be another layer incorporating a tie layer. Preferred materials for this tie layer may be ethylene ester copolymers, such as ethylene vinyl acetate copolymers, ethylene methyl acrylate copolymers and other materials well known in the art. A preferred version might include maleic anhydrite modified ethylene ester copolymer. Commercial trademarks are for example BYNEL® from Dupont and ADMER® from Mitsui.

Any of the layers described above may also include additives well known in the art such as slip agents, antiblock, polymer processing aids, antistatic, antifog, acid scavengers, odour scavengers and the like. A person skilled in the art may select the right additives according to any particular needs.

According to a further aspect, the present invention discloses a bag or pouch comprising a film according to the present invention.

In a further aspect, the invention is directed to the use of the films or the bag or pouch of the invention for packaging food. For example, the food item is putted inside the bag and the air is removed (vacuumising) with the help of a vacuum device. Subsequently, the open end of the bag is sealed and the vacuum pack is placed in a heat shrinking media such as hot water under a temperature that ensures the shrink of the pack (eg 90°C). The pack than is ready and is characterized by appealing appearance and long shelf life because of the absence of oxygen.

The film described in the application may also be used in further applications such as a single wound sheet for horizontal (flowpack) packaging systems or lidding film for thermoforming applications.

The preferred method for the production of the film is coextrusion in a multilayer die.

The present invention is now described by the following Examples:

### EXAMPLES

A 5 layer film is produced in a double bubble (the double bubble method is described in US 3,456,044) commercial line with the following recipe.

| | |
|---|---|
| Inner (sealing layer), | 85% P1+ 10% P2+ 5% ADDITIVES |
| Adjacent layer | 93% E1+ 7% ADDITIVES |
| Barrier layer | PVDC commercial grade |
| Adjacent layer | 100% E2 |
| Outer layer | 100% PBT1 |

See table 1

The thickness of the structure is 22/13/4/9/7 starting from the inner and going to the outer layer.

**TABLE 1**

| Type | Description | Manufacturer | Melt Index g/10 min | Density g/cm³ | Melting point ° C. |
|---|---|---|---|---|---|
| E1 | EVA | Dupont 3135 X | 0.35 | 0.93 | 95 |
| E2 | EVA | Dupont BYNEL 3861 | | | |
| P1 | LLDPE | Dow | | 0.916 | |
| P2 | PLASTOMER | Dow | 1 | 0.885 | |
| PBT1 | PBT | DSM | | 1.33 | 225 |

The comparison film has the same structure as the film according to the invention shown above, but contains a polyester material in its outer layer, having a melting point of less than 200°C.

### Tests

1. Haze measurement. The haze measurement was done according to ASTM D 1003.
2. Gloss measurement. This was done according to BS 2782.
3. Shrinkage measurement done according to ASTM 2732 at 90°C.
4. Sealing window.

This final test was done on a Bosch vacuum sealing machine (type GM2002). We put one piece of the tube of each material on another so that there is an overlap area. We seal this area and then we pull. The material is thought to be OK if the outer surfaces are easily pulled without any delamination or resistance and the inner(sealing layers) are at the same time strongly sealed. Different sealing times were applied in order to see which of the three materials has a more extended operating window.

The results are displayed on table 2

**TABLE 2**

| | HAZE | GLOSS | SHRINKAGE(MD/TD) | STACK SEAL WINDOW (sealing times) |
|---|---|---|---|---|
| Inventive material | 15 | 95 | 32/32 | 4-10 |
| Comparison material | 12 | 92 | 40/40 | failure |

## Claims

1. A heat shrinkable multilayer film, where the outer layer of the film comprises a polyester with melting point of more than 220°C and the film comprises a core layer comprising PVDC, wherein the polyester used in the outer layer is PBT, wherein the outer layer does not comprise a blend of PBT with a polyester elastomer.

2. The film of claim 1 where there is one layer between the outer layer and the PVDC core layer comprising a tie layer.

3. The film of claim 2, where the tie layer comprises ethylene ester copolymer.

4. The film of one or more of the preceding claims, where the film is coextruded.

5. The film of one or more of the preceding claims, where the film comprises an inner heat-sealing layer comprising at least one homogeneous polymer.

6. The film of one or more of the preceding claims, wherein the PVDC used in the core layer is a copolymer comprising vinyl chloride or methyl acrylate mers.

7. The film of one or more of the preceding claims, wherein the film is irradiated.

8. The film of claim 5, wherein the heat-sealing layer comprises a single polyolefin or a blend of different polyolefins.

9. The film of claim 8, wherein at least one homogenous polyolefin is used.

10. A bag, tube or pouch comprising a film of one or more of claims 1-9.

11. Use of a bag or pouch of claim 10 for packaging food.

## Patentansprüche

1. Wärmeschrumpfbare mehrschichtige Folie, wobei die äußere Schicht der Folie einen Polyester mit einem Schmelzpunkt von über 220 °C enthält und die Folie eine Kernschicht umfasst, die PVDC enthält, wobei der in der äußeren Schicht verwendete Polyester PBT ist, wobei die äußere Schicht keine Mischung aus PBT mit einem Polyesterelastomer enthält.

2. Folie nach Anspruch 1, wobei es eine Schicht zwischen der äußeren Schicht und der PVDC-Kernschicht gibt, die eine Haftvermittlungsschicht enthält.

3. Folie nach Anspruch 2, wobei die Haftvermittlungsschicht Ethylenestercopolymer enthält.

4. Folie nach einem oder mehreren der vorstehenden Ansprüche, wobei die Folie koextrudiert ist.

5. Folie nach einem oder mehreren der vorstehenden Ansprüche, wobei die Folie eine innere Wärmeversiegelungsschicht umfasst, die mindestens ein homogenes Polymer enthält.

6. Folie nach einem oder mehreren der vorstehenden Ansprüche, wobei das in der Kernschicht verwendete PVDC ein Copolymer ist, das Vinylchlorid- oder Methylacrylateinheiten enthält.

7. Folie nach einem oder mehreren der vorstehenden Ansprüche, wobei die Folie bestrahlt wird.

8. Folie nach Anspruch 5, wobei die wärmeversiegelnde Schicht ein Einzelpolyolefin oder eine Mischung aus unterschiedlichen Polyolefinen enthält.

9. Folie nach Anspruch 8, wobei mindestens ein homogenes Polyolefin verwendet wird.

10. Tüte, Rohr oder Beutel, die eine Folie nach einem oder mehreren der Ansprüche 1 bis 9 umfassen.

11. Verwendung einer Tüte oder eines Beutels nach Anspruch 10 zur Verpackung von Lebensmitteln.

## Revendications

1. Film multicouches thermorétractable, dans lequel la couche externe du film comprend un polyester avec un point de fusion de plus de 220 °C et le film comprend une couche de coeur comprenant du PVDC, dans lequel le polyester utilisé dans la couche externe est le PBT, où la couche externe ne comprend pas un mélange de PBT avec un élastomère polyester.

2. Film selon la revendication 1, dans lequel il y a une couche entre la couche externe et la couche de coeur de PVDC comprenant une couche de liaison.

3. Film selon la revendication 2, dans lequel la couche de liaison comprend un copolymère ester d'éthylène.

4. Film selon l'une ou plusieurs des revendications précédentes, dans lequel le film est coextrudé.

5. Film selon l'une ou plusieurs des revendications précédentes, dans lequel le film comprend une couche de scellement à la chaleur interne comprenant au moins un polymère homogène.

6. Film selon l'une ou plusieurs des revendications précédentes, dans lequel le PVDC utilisé dans la couche de coeur est un copolymère comprenant du chlorure de vinyle ou des mères d'acrylate de méthyle.

7. Film selon l'une ou plusieurs des revendications précédentes, dans lequel le film est irradié.

8. Film selon la revendication 5, dans lequel la couche de scellement à la chaleur comprend une simple polyoléfine ou un mélange de différentes polyoléfines.

9. Film selon la revendication 8, dans lequel au moins une polyoléfine homogène est utilisée.

10. Sac, tube ou poche comprenant un film selon l'une ou plusieurs des revendications 1 à 9.

11. Utilisation d'un sac ou d'une poche selon la revendication 10 pour conditionner de la nourriture.
